# EUROPÄISCHE PATENTANMELDUNG

(11) **EP 1 967 072 A1**
(43) Veröffentlichungstag der Anmeldung: **10.09.2008**
(21) Anmeldenummer: 08004119.7
(22) Anmeldetag: 06.03.2008
(51) Int. Cl.: A22C 11/00

(54) **Wurst und Weisswurst für den menschlichen Verzehr und Vorrichtung zum Herstellen und/oder Verarbeiten von Würsten**

(30) Priorität: 08.03.2007 DE 202007003600 U
(71) Anmelder: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Eisele, Otten, Roth & Dobler

(57) **Zusammenfassung**

Es wird eine Wurst (1) für den menschlichen Verzehr vorgeschlagen, die eine Wurstfüllung (3) und eine Wursthülle (2) aufweist. Erfindungsgemäß ist an der Wursthülle (2) eine Information (4) angebracht, die Rückschlüsse auf eine Vorzugsrichtung P für das Ablösen der Wursthülle (2) von der Wurstfüllung (3) zulässt.

## Beschreibung

Die' Erfindung betrifft eine Wurst bzw. Weißwurst und eine Vorrichtung nach Anspruch 9.

Bei Würsten mit einer Wursthülle wie zum Beispiel Weißwürsten, die nach dem Erhitzen insbesondere im heißen Zustand verzehrt werden, wird in der Regel die Wursthülle bzw.,Wursthaut von der Wurstfüllung kurz vor dem Verzehr entfernt. Das Ablösen der Wursthaut von der gekochten bzw. noch heißen Wurst ist häufig nicht ganz einfach und stellt auch für darin geübte Personen eine Herausforderung dar. Insbesondere im Falle von Weißwürsten kommt es immer wieder vor, dass der Ablosevorgang der Wursthaut unbefriedigend ist bzw. sich für die betreffende Person daraus eine peinliche Situation ergeben kann. Außerdem können insbesondere bei unsachgemäß entfernten Wursthäuten an der abgezogenen Wursthaut deutliche Mengen der Wurstfüllung verbleiben, was ebenfalls unerwünscht ist. Durch das nicht sachgerechte bzw. schwierige Abziehen der Wursthaut verstreicht zudem soviel Zeit, dass die zuvor stark erhitzte Wurstfüllung merklich abkühlen kann, worunter der anschließende Wurstgenuss leidet.

### Aufgabe und Vorteile der Erfindung

Aufgabe der Erfindung ist es, den oben genannten Nachteilen Abhilfe zu schaffen.

Dies wird durch den Anspruch 1, 2 und 10 gelöst. In den abhängigen Ansprüchen sind vorteilhafte Ausführungsformen der Erfindung aufgezeigt.

Die Erfindung geht von einer Wurst für den menschlichen Verzehr aus, die eine Wurstfüllung und eine Wursthülle aufweist.,Insbesondere handelt es sich dabei um Würste, bei denen die Wursthülle zum Verzehr der Wurstfullung entfernt wird. Der Kern der Erfindung liegt darin, dass an der Wursthülle eine Information angebracht ist, die Rückschlüsse auf eine Vorzugsrichtung für das Ablösen der Wursthülle von der Wurstfüllung zulässt. Die Information ist so ausgebildet, dass diese an der zum Verzehr zubereiteten Wurst von einer Person gut erkennbar ist.

Die Erfindung macht sich dabei die Erkenntnis zunutze, dass das Ablöseverhalten der Wursthülle gegenüber der Wurstfüllung stark von der Abloserichtung bzw. der Richtung der Abziehens der Wursthülle von der Wurstfüllung abhängt. Denn die Haltekraft bzw. Trennbarkeit zwischen Wursthülle und Wurstfüllung ist richtungsabhängig. Insbesondere in bzw. gegen die Längsrichtung der Wurst kann das Ablösen der Wursthülle deutlich besser oder schlechter gelingen. Dieser Umstand liegt insbesondere im Herstellungsprozess bzw. im Einfüllvorgang der Wurstfüllung in die Wursthulle begründet. Prinzipiell können auch noch andere Faktoren dabei eine Rolle spielen z.B. die Beschaffenheit und Art der Wursthaut und/oder Wurstfüllung. Wird nun erfindungsgemäß an der Wursthülle eine Information angebracht, welche es einer Person ermöglich, die Wursthülle auf die bevorzugte Weise bzw. in der richtigen Ablöserichtung von der wurstfüllung abzulösen, werden die genannten Unannehmlichkeiten vermieden:

Insbesondere betrifft die Erfindung eine Weißwurst für den menschlichen Verzehr, die eine Wurstfüllung und eine Wursthulle aufweist. Bei Weißwürsten wird in den meisten Fällen die Wursthaut nach dem Garen der wurst bzw. kurz vor dem Verzehr der Wurstfüllung entfernt. Der wesentliche Aspekt' der Erfindung liegt auch hierbei darin, dass an der Wursthülle eine Information angebracht ist, die Rückschlüsse auf eine Vorzugsrichtung für das Ablösen der Wursthülle von der Wurstfüllung zulässt. Besonders bei Weißwürsten, welche heiß zubereitet verzehrt werden, ist ein sauberes bzw. einfaches Ablösen der Wursthaut von der Richtung des Ablösens abhängig. In eine Richtung bezogen auf die Längsrichtung der Weißwurst ist dies nahezu problemlos möglich, in die andere Richtung dagegen nur schwer bzw. bleiben beim Abziehen Reste der Wurstfüllung an der abgelösten Weißwursthaut haften oder reißt die Wurstfüllung gegebenenfalls vollständig auseinander. Gerade bei Weißwürsten kann somit erfindungsgemäß das Ablösen der Wursthaut vorteilhaft bzw. verbessert erfolgen, indem dank der vorhandenen Information immer die richtige Ablöserichtung gewählt werden kann.

Besonders bevorzugt ist es, dass mit der Information an der Wursthülle ohne Weiteres Rückschlüsse auf eine bevorzugte Abloserichtung der Wursthülle von der Wurstfüllung möglich sind. Damit kann einer Person, welche die Wursthaut entfernen möchte, die ideale Ablöserichtung der Wursthülle von der Wurstfüllung angezeigt werden. Das Ablösen der Wursthulle erfolgt dann gemäß der von der Person erfassten Information und die Wursthülle kann vergleichsweise einfach vom Inneren der Wurst entfernt werden. Dies erfolgt vorteilhafterweise so, dass im Idealfall alleinig die Wursthülle von der Wurstfüllung abgezogen werden kann bzw. nur vergleichsweise geringe bzw. vernachlässigbare Reste der Wurstfüllung an der abgelösten Wursthülle haften bleiben. Der Vorgang kann außerdem in relativ kurzer Zeit erfolgen und die Wurstfüllung kühlt damit kaum aus und kann so mit hohem Genusswert bzw. heiß verzehrt werden.

Vorteilhafterweise umfasst die Information ein Symbol, eine Ziffer, eine Zahl, ein Bild, ein Begriff und/oder eine Kombination daraus. So kann nahezu jegliche Art von Information auf der Wursthülle bereitgestellt werden. Denkbar ist neben einzelnen Symbolen und dergleichen eine mehrteilige Information bzw. eine Wort- oder eine Bild-Wort-Information. Besonders einfach bzw. wenig störend auf das äußere Erscheinungsbild der Wurst kann die Information zum Beispiel als Pfeil ausgestaltet sein, dessen Spitze eine Vorzugsablöserichtung oder ein bevorzugtes Ende der Wurst kenntlich machen soll. Die Information bzw. Markierung muss insbesondere Lebensmittelstandards entsprechen bzw. darf beim Erhitzen bzw. beim Zubereiten wie z.B. dem Garen in heißem Wasser nicht unkenntlich werden bzw. darf sich nicht nachteilig verändern, ablösen oder verfälschen.

Die Information ist insbesondere eine optische Information an der Wurst bzw. der Wursthülle. Die Information kann beispielsweise auf der Wursthaut aufgedruckt oder auf eine sonstige Art und Weise an der Wurst bzw. Wursthülle angebracht werden. Dabei ist zu beachten; dass die Information den gesetzlichen Vorgaben bzw. Hygienevorschriften bzw. Anforderungen im Hinblick auf die Anwendung für Lebensmittel bzw. für Wurstwaren entspricht.

Vorteilhafterweise wird die Information durch ein an der Wurst vorhandenes Informationselement bereitgestellt, insbesondere ein Klemmring zum Verschließen der Wurst. Damit kann, ohne dass ein zusätzliches Element für die Bereitstellung der Information notwendig ist, diese Information realisiert werden. Da häufig die Wurstenden durch einen Klemmring verschlossen werden, kann mittels diesem Ring die betreffende Information gegeben werden. Zum Beispiel kann an einem Informationselement bzw. einem von zwei Ringen eine farbliche, geprägte oder andere Markierung bzw. Farbinformation bereitgestellt werden. Auch/kann mit der Art bzw. Form des Informationselements die entsprechende Information an der Wurst erfolgen. Grundsätzlich lässt sich die Information auch durch ein eigens dafür vorgesehenes Informationselement bewerkstelligen. Zum Beispiel ein um die Wurst positioniertes Element mit einer schnurartigen Befestigung. So kann beispielsweise an der Wurst ein Informationsplättchen mit Farb-, Schrift- bzw. Symbolinformation festgemacht werden.

Bevorzugt lässt die Information an der Wursthülle Rückschlüsse über eine Einfüllrichtung der Wurstfüllung in die Wursthülle zu. Damit ist es einer Person möglich, die Wurst von deren Wursthulle in der bevorzugten Richtung zu befreien, insbesondere die Wursthaut in Richtung der Einfüllrichtung von der Wurstfüllung einfach abzuziehen. Bisher war es dem Zufall überlassen, in welcher Richtung die Wursthaut abgezogen wurde bzw. wurde mit einer mittleren Wahrscheinlichkeit von 50 % die Wursthülle von der Wurstfüllung in der für das Ablösen erschwerten Richtung abgelöst, mit all den damit verbundenen bzw. einleitend beschriebenen Nachteilen.

Weiter wird vorgeschlagen, dass die Information darüber Auskunft gibt, von welchem Ende der Wurst beginnend in Richtung des anderen Endes der Wurst das Ablösen bevorzugt ist. Beispielsweise kann ein Wurstende mit einer passenden Information versehen bzw. markiert, so dass fur eine Person, welche die Wurst verzehren möchte, es klar ersichtlich ist, von welchem Ende die Wursthülle einfacher von der Wurstfüllung entfernt bzw. abgezogen werden kann.

In einer vorteilhaften Ausführungsform des Erfindungsgegenstandes sind die Information an einem Endbereich der Wurst ausgebildet ist. Damit bleibt das äußere bzw. optische Erscheinungsbild der Wursthülle bzw. der Wurst insgesamt vergleichsweise wenig verändert. Insbesondere kann an dem Ende der Wurst die Information angebracht werden, an welchem beispielsweise die Wursthülle angeschnitten werden soll, um dort beginnend die Wursthaut von der Wurstfüllung abzuziehen.

Schließlich ist es außerdem bevorzugt, dass die Information an einem Verschlussabschnitt an der Wurst realisiert ist. Beispielsweise ist es denkbar, dass mittels eines Verschlusselements für das endseitige Verschließen der Wurst, beispielsweise in Form eines Klemmringes, z.B. aus einem Kunststoff-, Aluminium- oder einem anderen,Metallmaterial die Information bereitgestellt wird bzw. das betreffende Wurstende kennzeichnet. Das Verschlusselement kann beispielsweise eine Farbmarkierung aufweisen und damit einer Person anzeigen, dass vom betreffenden Wurstende beginnend es vorteilhaft ist, die Wursthaut abzulösen.

Ein weiterer wesentlicher Aspekt der Erfindung betrifft eine Vorrichtung zum Herstellung und/oder Verarbeiten von Würsten, wobei die Wurst gemäß einer der oben genannten Ausgestaltungen realisiert ist.

Insbesondere kann mit der Vorrichtung an der Wursthülle eine Information angebracht werden, die eine Vorzugsrichtung für das Ablösen der Wursthülle von der Wurstfüllung angibt, womit sich die oben diskutierten Vorteile erzielen lassen.

### Figurenbeschreibung

In der einzigen Figur wird die Erfindung beispielhaft erläutert.

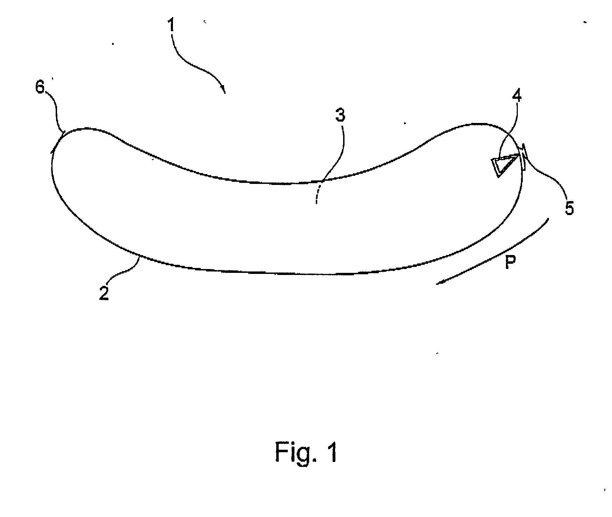

Figur 1 zeigt eine schematisiert dargestellte Wurst, zum Beispiel eine Weißwurst 1 mit einer Wursthülle bzw. Wursthaut 2. Im Inneren der Wurst 1 ist eine Wurstfüllung 3 , die nach außen vollständig oder nahezu vollständig umschlossen wird. An den beiden Enden der leicht gekrummten Weißwurst 1 ist diese verschlossen, z.B. mit Verschlusselementen 5 und 6. Hierzu eignen sich zum Beispiel Metallringe, welche zusammenklemmend die Wursthaut 2 in beiden Endabschnitten der Wurst 1 zusammenziehen und festgeklemmt die Wurstenden sicher verschließen.

An einem der beiden Enden ist gut sichtbar für eine Person, welche die Wurst 1 verzehren möchte, eine Markierung 4 in Form eines Symbols bzw. eines Pfeils an bzw. auf der Wursthaut 2 vorhanden. Die Markierung 4 bzw. das Pfeilsymbol gibt eine Information, in welcher Richtung die Wursthaut 2 bevorzugt bzw. einfacher von der Wurstfüllung 3 abgezogen werden kann. Eine bevorzugte Ablöserichtung ist beispielhaft in Figur 1 mit dem Pfeil P symbolisiert. Die Markierung 4 bzw. das Symbol kann insbesondere so vorgesehen werden, dass in jeder Lage der Weißwurst auf z.B. einem Teller die Markierung erkennbar ist. Dies kann z.B. auch durch eine umfänglich an der Wursthaut 2 angebrachte Information erfolgen z.B. durch einen Streifensymbol insbesondere umfänglich durchgehend an einem Ende der Weißwurst 1. Im gezeigten Beispiel gemäß Figur 1 kann an der zur Längsachse der Weißwurst 1 gegenüberliegenden Seite der Markierung 4 bzw. am gleichen Wurstende eine weitere z.B. Pfeilmarkierung vorhanden sein (nicht erkennbar).

Es kann dabei wie gezeigt ein Ende der Wurst 1 markiert werden, von welchem beginnend die Wursthaut 2 leicht abgezogen werden kann. Es sind aber anstelle bzw. zusätzlich zur Markierung 4 auch andere Markierungen bzw. sonstige ggf. mehrere kombinierte Symbole, Zahlen, Bilder, Buchstaben oder Worte auf der Wursthaut 2 aufbringbar, welche die geeignete Ablöserichtung für die Wursthaut kenntlich machen.

Auch eine farbliche Kennzeichnung kann zusätzlich oder alternativ zur Markierung vorhanden sein, zum Beispiel ein besonders farblich ausgestalteter bzw. einfarbiger Verschlussring bzw. Verschlusselement 5 an dem betreffenden Wurstende.

Bezugszeichenliste:
- 1: Wurst
- 2: Wursthaut
- 3: Wurstfüllung
- 4: Markierung
- 5: Verschlusselement
- 6: Verschlusselement

## Patentansprüche

1. Wurst (1) für den menschlichen Verzehr, die eine Wurstfüllung (3) und eine Wursthülle (2) aufweist, **dadurch gekennzeichnet, dass** an der Wursthülle (2) eine Information (4) angebracht ist, die Rückschlüsse auf eine Vorzugsrichtung P für das Ablösen der Wursthülle (2) von der Wurstfüllung (3) zulässt.

2. Weißwurst (1) für den menschlichen Verzehr., die eine Wurstfüllung '(3) und eine Wursthülle (2) aufweist, **dadurch gekennzeichnet, dass** an der Wursthülle (2) eine Information (4) angebracht ist, die Rückschlüsse auf eine Vorzugsrichtung für das Ablösen der Wursthülle (2) von der Wurstfüllung (3) zulässt.

3. Wurst nach einem der vorhergehenden Ansprüche, **dadurch gekennzeichnet, dass** die Information ein Symbol (4), eine Ziffer, eine Zahl, ein Bild, ein Begriff und/oder eine Kombination daraus umfasst.

4. Wurst nach einem der vorhergehenden Ansprüche, **dadurch gekennzeichnet, dass** die Information durch ein an der Wurst' vorhandenes Informationselement bereitgestellt wird, insbesondere ein Klemmring zum Verschließen der Wurst.

5. Wurst nach einem der vorhergehenden Ansprüche, **dadurch gekennzeichnet, dass** die Information (4) an der Wursthülle (2) Rückschlüsse über eine Einfüllrichtung der Wurstfullung (3) in die Wursthulle (2) zulässt.,

6. Wurst nach einem der vorhergehenden Ansprüche, **dadurch gekennzeichnet, dass** die Information (4) darüber Auskunft gibt, von welchem Ende der Wurst beginnend in Richtung des anderen Endes der Wurst das Ablösen bevorzugt ist.

7. Wurst nach einem der vorhergehenden Ansprüche, **dadurch gekennzeichnet, dass** die Information (4) an einem Endbereich der Wurst ausgebildet ist.

8. Wurst nach einem der vorhergehenden Ansprüche, **dadurch gekennzeichnet, dass** die Information an einem Verschlussabschnitt (5, 6) an der Wurst realisiert ist.

9. Vorrichtung zum Herstellung und/oder Verarbeiten von Würsten nach einem der vorhergehenden Ansprüche.
